# EUROPÄISCHE PATENTSCHRIFT

(11) **EP 3 183 996 B1**
(45) Veröffentlichungstag und Bekanntmachung des Hinweises auf die Patenterteilung: **13.11.2019**
(21) Anmeldenummer: 16205458.9
(22) Anmeldetag: 20.12.2016
(51) Int. Cl.: A47B 88/407, A47B 88/427

(54) **SCHUBLADENFÜHRUNG**
GUIDE UNIT FOR A DRAWER
UNITÉ DE GUIDAGE POUR UN TIROIR

(30) Priorität: 22.12.2015 DE 202015107020 U
(43) Veröffentlichungstag der Anmeldung: 28.06.2017
(73) Patentinhaber: Grass GmbH, 6973 Höchst (AT)
(72) Erfinder: Schneider, Klaus, 6973 Höchst (AT)
(74) Vertreter: Otten, Roth, Dobler & Partner mbB Patentanwälte

(56) Entgegenhaltungen:
- EP-A1- 2 222 202
- AT-B1- 510 954
- DE-A1- 2 301 637
- DE-A1-102013 005 512
- DE-A1-102013 104 829

## Beschreibung

### Stand der Technik

Bei Möbeln bzw. bei Führungseinheiten zur Bewegungsführung von Möbelteilen gegenüber einem Möbelkorpus des Möbels sind Vorrichtungen bekannt, die zur Verstellung der Position des bewegbaren Möbelteils am Möbel dienen, was sich insbesondere auf eine Schließposition des Möbelteils am Möbel bezieht. Die Verstellung der Position des Möbelteils ist zum Beispiel bei Schubladen insbesondere im Hinblick auf einen Frontspalt, eine Höhenposition und/oder eine Neigung der Schublade von Interesse. Der Frontspalt beispielsweise bildet sich im Schließzustand einer Schublade zwischen einer Innenseite eines Frontelements der Schublade und gegenüberliegenden schmalen stirnseitigen Seitenwänden des Möbelkorpus aus. Der Frontspalt eines Möbelteils am Möbel variiert bzw. ist z. B. aufgrund von Fertigungs- und Montagetoleranzen nicht exakt vorbestimmbar, so dass für ein einheitliches Frontbild des Möbels bzw. für die sichere Funktion zum Beispiel einer Touch-Latch-Funktionalität am Möbel eine Einstellbarkeit des Frontspalts erforderlich ist.

Bisherige Verstellvorrichtungen führen nicht in allen praxisrelevanten Fällen zu einer dauerhaft zuverlässigen Einstellung.

Die DE 23 01 637 A1 betrifft einen Beschlag zur Höhenverstellung von Möbelteilen. Die DE 10 2013 005 512 A1 thematisiert eine Positioniervorrichtung für ein Möbelteil.

### Aufgabe und Vorteile der Erfindung

Aufgabe der vorliegenden Erfindung ist es, eine Verstellvorrichtung der eingangs erläuterten Art bzw. eine Möbelteil-Führungseinheit und ein entsprechendes Möbel im Hinblick auf eine in der Praxis dauerhaft zuverlässige Verstellung verbessert bereitzustellen, insbesondere im Hinblick auf eine Frontspalt-, Höhen- und/oder Neigungsverstellung von Möbelschubladen, Möbelklappen oder Möbeltüren an einem Möbel.

Diese Aufgabe wird durch die unabhängigen Ansprüche gelöst. Die abhängigen Ansprüche richten sich auf vorteilhafte Varianten der Erfindung.

Die Erfindung geht aus von einer Vorrichtung zur Verstellung einer Position eines Möbelteils an einem Möbel, wobei mit der Verstellung die Position des Möbelteils in einer Schließstellung an einem Möbelkorpus des Möbels vorgebbar ist, und wobei das Möbelteil über eine Führungseinheit bewegbar an dem Möbelkorpus anbringbar ist, umfassend Positioniervorgabemittel, die zwischen dem Möbelkorpus und dem bewegbaren Möbelteil vorgesehen sind, wobei die Positioniervorgabemittel ein an einem Drehlager um eine Drehachse drehbares Verstellelement und einen Anlageabschnitt umfassen, der mit einer Stellkontur des Verstellelements zusammenwirkt, wobei die Stellkontur zur Drehachse spiralartig verlaufend ausgebildet ist, womit abhängig von der Drehstellung des Verstellelements ein am Anlageabschnitt wirksamer Bereich der Stellkontur den Anlageabschnitt in eine Stellung versetzt, womit die Position des Möbelteils in der Schließstellung vorgebbar ist.

Die Führungseinheit kann beispielsweise eine Schwenkführung oder eine Linearführung wie eine Schienenführung für Schubladen sein, beispielsweise ein Teil- oder ein Vollauszug mit zueinander verschieblichen bzw. teleskopierbaren Schienen. Ein Vollauszug weist eine im montierten Zustand positionsfeste Korpusschiene, eine daran verschiebliche Mittelschiene und eine mit dem Möbelteil verbindbare Schubladenschiene auf, die an der Mittelschiene verschiebbar aufgenommen ist. In der Regel sind für eine Schublade zwei Führungseinheiten vorgesehen, so dass die Schublade über deren Breite an gegenüberliegenden unterseitigen bzw. seitlichen Abschnitten an dem Möbelkorpus verschieblich bewegbar abgestützt ist.

Der Kern der Erfindung liegt darin, dass die Stellkontur in Umfangsrichtung zur Drehachse des Verstellelements einen Mehrkantabschnitt mit mehreren zueinander winklig ausgerichteten Flächenabschnitten aufweist, wobei die Stellkontur mit einem Gegenabschnitt am Anlageabschnitt derart zusammenwirkt, dass mehrere vorgegebene Drehstellungen des Verstellelements einrichtbar sind, wobei in jeder vorgegebenen Drehstellung des Verstellelements ein Flächenabschnitt der Stellkontur flächig an dem Gegenabschnitt anliegt, womit ein Widerstand gegen ein Verdrehen des Verstellelements eingerichtet ist.

Mit jeder der mehreren vorgegebenen Drehstellungen des Verstellelements ist eine andere Position des Möbelteils an dem Möbel bereitstellbar bzw. einstellbar. Vorzugsweise umfasst der Gegenabschnitt genau eine Gegenfläche, die mit einem Flächenabschnitt der Stellkontur flächig in Anlage bringbar ist. Alternativ sind genau zwei Gegenflächen am Gegenabschnitt vorhanden, die in einer Drehstellung des Verstellelements mit zwei Flächenabschnitten der Stellkontur in Anlage bringbar sind.

Mit dem einrichtbaren Widerstand in jeder Drehstellung wird vorzugsweise eine Selbsthemmung der Vorrichtung eingerichtet. Die Selbsthemmung ist vorteilhaft in jeder einrichtbaren und einem Verstellzustand zugehörigen Drehstellung des Verstellelements gleichartig vorteilhaft wirksam.

Mit der Mehrkantform der Stellkontur sind winklige Übergänge zwischen zwei benachbarten Mehrkantflächen bzw. den ebenen bzw. geraden Flächenabschnitten geschaffen, die als mechanische Anschläge wirken. Die Anschläge hemmen eine Relativbewegung zwischen dem Mehrkantabschnitt und dem am Mehrkantabschnitt bzw. dem Flächenabschnitt sich abstützenden bzw. anliegenden Gegenabschnitt.

Gegenüber einem gebogenen bzw. einem konkav oder konvex geformten Verlauf der Stellkontur, der absatzfrei ist und gegen ein Verstellen bei von außen wirkenden Druck- oder Zugkräften nicht mechanisch hemmend wirkt, ist die vorgeschlagene Stellkontur zuverlässiger. Denn mit der Mehrkantform bzw. mit der Polygonalform der Stellkontur und mit dem dazugehörigen Gegenabschnitt ist in jeder eingerichteten Drehstellung des Verstellelements diese selbstsichernd eingerichtet, insbesondere durch Formschluss.

Vorteilhafterweise führen durch von außen an der Führungseinheit, dem Möbelteil und/oder am Möbel wirksame Kräfte und Momente beispielsweise Druckkräfte, welche an der Stellkontur bzw. dem Gegenabschnitt zur Wirkung kommen, aufgrund der Erfindung zu keiner ungewollten bzw. selbsttätigen Änderung der eingerichteten Stellung zwischen der Stellkontur und dem Gegenabschnitt. In der Praxis sind relevante äußere Kräfte und Momente beispielsweise bedingt durch Vibrationen am oder im Bereich des Möbels, zum Beispiel durch ein Anstoßen am Möbel, und/oder bedingt durch die Gewichtswirkung aufgrund einer Beladung des Möbelteils mit Gegenständen, insbesondere wenn sich das Möbelteil bewegt bzw. mit Erreichen seiner Endstellung stoßartig belastet wird.

Vorzugsweise ist der Gegenabschnitt auf die Abmessung und/oder die Form der Stellkontur abgestimmt. Vorteilhafterweise kommen der Gegenabschnitt und die Stellkontur in jeder einrichtbaren Drehstellung des Verstellelements zwangsweise in gegenseitige Anlage. Dabei kommt es vorzugsweise zu einer vollflächigen Anlage des Gegenabschnitts und dem dazugehörigen Flächenabschnitt der Stellkontur. Mit dem Flächenkontakt sind außerdem haftungserhöhende Effekte erzielbar, insbesondere Haftreibungseffekte.

Vorzugsweise sind gegenüberliegende Ränder des Gegenabschnitts in Anstoßkontakt mit winklig an den betreffenden Flächenabschnitt beidseitig anschließenden Flächenabschnitten der Stellkontur. Damit wird bezüglich den beiden möglichen lateralen Verstellrichtungen des betreffenden Flächenabschnitts vom Gegenabschnitt ein Widerstand entgegengesetzt, so dass eine selbsttätige Verstellung in der Praxis nicht auftreten kann. Der Widerstand ist derart, dass dieser allein durch ein manuelles Verstellen von außen mit dem Verdrehen des Verstellelements aufhebbar ist.

Die Verstellvorrichtung ist an der Führungseinheit an einer Schubladenschiene einer Schubladenführung anbringbar. Die Verstellvorrichtung dient vorzugsweise der Einstellung eines Maßes eines Frontspaltes des bewegbaren Möbelteils, der sich zwischen einer Innenseite eines Frontelements des bewegbaren Möbelteils und vorderen Abschnitten des Möbelkorpus ausbildet, wenn sich die Schublade in einer ruhenden Schließstellung am Möbel befindet.

Grundsätzlich ist eine alternative Anbringung der Verstellvorrichtung am Möbelteil oder am Möbelkorpus denkbar.

Eine vorteilhafte Variante der Erfindung zeichnet sich dadurch aus, dass der Mehrkantabschnitt mehrere in Verlaufsrichtung der Stellkontur benachbarte Flächenabschnitte umfasst. Damit ist frei wählbar jeweils eine von einer Mehrzahl von verschiedenen einstellbaren Verstellpositionen einrichtbar. Durch Verdrehen des Verstellelements kommt ein gewünschter der mehreren Flächenabschnitte an dem Gegenabschnitt in flächige Anlage. Da jeder Flächenabschnitt aufgrund des Spiralverlaufs der Stellkontur unterschiedlich weit bzw. mit einem anderen Radius von der Drehachse des Verstellelements beabstandet ist, kommt es zu einer Relativbewegung in eine Verstellrichtung der Verstellvorrichtung zwischen der Stellkontur und dem Gegenabschnitt. Für diese Relativbewegung ist eine entsprechende bewegliche Lagerung vorgesehen. Zum Beispiel eine Schiebelagerung für eine lineare Hin- und Herbewegung bzw. eine Relativbewegung zwischen dem Verstellelement und dem Gegenabschnitt. Da das Verstellelement und der Gegenabschnitt in der Regel an jeweiligen Bauteilabschnitten wie zum Beispiel an jeweiligen Gehäuseabschnitten der Verstellvorrichtung aufgenommen sind, ist zum Beispiel eine Verschiebelagerung zwischen den Gehäuseabschnitten eingerichtet. Ein dazugehöriger maximaler Verschiebeweg in zwei entgegengesetzte Verstellrichtungen, der insbesondere einem maximalen Verstellweg der Verstellvorrichtung entspricht, beträgt vorzugsweise wenige Millimeter zum Beispiel 2 bis 10 Millimeter. Dementsprechend ist die Stellkontur so abgestimmt, dass durch das Verdrehen des Verstellelements zwischen Endanschlagstellungen dieser Weg bereitstellbar ist. Die Differenz eines radialen Abstandes eines Flächenabschnitts der Stellkontur, der radial zur Drehachse am nächst liegt, zu einem radialen Abstand eines Flächenabschnitts der Stellkontur, der radial zur Drehachse am weitesten entfernt liegt, gibt einen maximalen Verstellweg der Verstellvorrichtung vor.

Vorzugsweise sind sämtliche Flächenabschnitte benachbart zueinander vorhanden, ohne einen dazwischenliegenden Abschnitt, der frei bleibt bzw. keinen ebenen Flächenabschnitt zur Anlage am Gegenabschnitt bereitstellt. Damit wird eine sehr feinstufige bis nahezu stufenlose Verstellung der Position des Möbelteils möglich.

Der Mehrkantabschnitt bzw. die Flächenabschnitte sind entsprechend vorzugsweise über die gesamte Spiralkurve der Stellkontur durchgehend ausgestaltet.

Vorzugsweise sind alle Flächenabschnitte gleichartig oder identisch gestaltet, insbesondere mit gleichen Abmessungen, eben und flach ausgebildet. Typische Längen- und/oder Breitenabmessungen der in der Grundfläche vorzugsweise viereckigen Flächenabschnitte liegt im Bereich zwischen unter einem bis circa zwei Millimeter.

Ebenfalls ist es bevorzugt, wenn die Oberflächenbeschaffenheit aller Flächenabschnitte gleichartig ist, gegebenenfalls zum Beispiel mit einer vorgegebenen Rauhigkeit, was bei erhöhter Oberflächenrauhigkeit die Haftreibungswirkung im Zustand der Anlage am Gegenabschnitt steigert. Auch dies ist im Hinblick auf eine ungewollte Verstellung eines Einstellzustandes vorteilhaft.

Des Weiteren ist es von Vorteil, wenn die Flächenabschnitte unter jeweils gleichem Winkel zueinander abgewinkelt ausgerichtet sind bzw. zwischen benachbarten Flächenabschnitten sich jeweils der gleiche Winkel ausbildet. Vorzugsweise ist ein vergleichsweise flacher Winkel zwischen benachbarten Flächenabschnitten vorhanden.

Eine praxisrelevante Stellkontur kann über etwa einen Halbkreisausschnitt der Spirale der Stellkontur zum Beispiel 10 bis 15 Flächenabschnitte aufweisen.

Es ist überdies vorteilhaft, dass die Stellkontur sich über einen Bogenabschnitt von circa 300 Winkelgrade, insbesondere über zumindest nahezu 360 Winkelgrade umfänglich zur Drehachse des Verstellelements erstreckt. Es ist alternativ eine Erstreckung beispielsweise über einen Halbkreisausschnitt oder einen Viertelkreisausschnitt vorteilhaft.

Es ist überdies vorteilhaft, dass die Stellkontur als stegartige vorstehende Erhebung an einer Grundplatte des Verstellelements ausgestaltet ist. Dadurch wird eine kompakte Ausbildung der Stellkontur erreicht. Vorzugsweise weist die stegartige Erhebung eine vergleichsweise schmale Form bzw. eine geringe Dicke auf, welche wie die Höhe der Erhebung zum Beispiel im Millimeterbereich liegt.

Die Erhebung steht an der Grundplatte in Richtung der Drehachse bzw. in Richtung der Längsrichtung der Drehachse vor.

Eine weitere alternative vorteilhafte Ausbildung der Erfindung ist dadurch charakterisiert, dass die Stellkontur gegenüberliegende Außenseiten aufweist, wobei jede Außenseite jeweils mehrere zueinander winklig ausgerichtete Flächenabschnitte umfasst. Die jeweils gegenüberliegenden Flächenabschnitte sind radial zur Drehachse beabstandet voneinander, womit der Abstand der radialen Breite der Stellkontur bzw. der stegartigen Erhebung entspricht. Vorzugsweise wirken in einer Drehstellung des Verstellelements die gegenüberliegenden Flächenabschnitte paarweise zusammen mit jeweils einem dazugehörigen Gegenabschnitt. Die gegenüberliegenden Flächenabschnitte sind vorzugsweise parallel in ihrer Flächenausrichtung. Die Gegenabschnitte mit ihren jeweiligen Flächen sind vorzugsweise ebenfalls parallel zueinander. Der Abstand zwischen den Gegenabschnitten ist vorzugsweise auf die Breite der Stellkontur bzw. der stegartigen Erhebung derart abgestimmt, dass die Stellkontur mit den jeweiligen gegenüberliegenden Flächenabschnitten in Anlage an den Gegenabschnitten kommt, wenn eine der vorgegebenen Drehstellungen eingerichtet ist. Gegebenenfalls ist ein vergleichsweise sehr geringes Spiel zwischen den Flächenabschnitten und den Gegenabschnitten wirksam, wobei ein Weiterdrehen des Verstellelements aus einer Drehstellung in eine andere Drehstellung immer möglich bzw. nicht blockiert ist.

Grundsätzlich nicht ausgeschlossen ist es, wenn die Gegenabschnitte in Umfangsrichtung der Drehachse des Verstellelements versetzt zueinander sind. Damit kommt in einer Drehstellung des Verstellelements ein erster Gegenabschnitt außen an der Stellkontur an einem ersten radial äußeren Flächenabschnitt in Anlage, und der andere Gegenabschnitt kommt in Anlage an einem anderen, zum ersten Flächenabschnitt nicht gegenüberliegenden radial inneren Flächenabschnitt, womit die Anlage nicht über an der Stellkontur gegenüberliegende Flächenabschnitt erfolgt.

Eine weitere vorteilhafte Modifikation der Erfindung zeichnet sich dadurch aus, dass das Verstellelement einen Bedienabschnitt zur Verdrehung des Verstellelements von außen aufweist. Hierdurch wird eine einfache und sichere Verdrehung des Verstellelements von einer Person insbesondere manuell erleichtert. Der Bedienabschnitt ist vorzugsweise über einen gesamten Kreisringbereich bzw. einen umfänglichen Bereich des Verstellelements ausgebildet. Am Bedienabschnitt ist vorzugsweise eine Struktur zur erleichterten Drehmomentübertragung wie eine Rillen- oder Zahnstruktur vorhanden.

Zusätzlich oder alternativ ist am Verstellelement ein zur Drehachse axial zugänglicher Bedienabschnitt zum Beispiel im Bereich der Drehachse ausgebildet. Der Bedienabschnitt kann auf die Form eines Drehwerkzeugs wie eines Kreuzschlitz-Schraubendrehers für ein Verdrehen mit einem solchen Drehwerkzeug abgestimmt ausgestaltet sein.

Gemäß einer anderen vorteilhaften Variante der Erfindung ist der Anlageabschnitt an einem zu einer Grundfläche erhaben ausgebildeten Erhöhungsabschnitt ausgestaltet. Der Erhöhungsabschnitt weist eine ebene flache bzw. abgeflachte Seite auf. Die flache Seite ist auf die Flächenabschnitte der Stellkontur abgestimmt, um in allen vorgesehenen Drehstellungen des Verstellelements jeweils mit vorzugsweise genau einem Flächenabschnitt der Stellkontur in flächige Anlage zu gelangen.

Die Grundfläche, an welcher der Erhöhungsabschnitt vorsteht, ist beispielsweise eine Gehäuseinnenseite der Verstellvorrichtung. Die Gehäuseinnenseite liegt gegenüber des Verstellelements, so dass der Erhöhungsabschnitt mit seiner flachen Seite mit der Stellkontur des Verstellelements zusammenwirkt bzw. mit einem Flächenabschnitt der Stellkontur in Anlage kommt.

Vorzugsweise weist der Anlageabschnitt zwei erhaben ausgebildete Abschnitte mit jeweils einer flachen Seite derart auf, dass in einer vorgegebenen Drehstellung des Verstellelements beide flachen Seiten an jeweils einem Flächenabschnitt in Anlage sind, was die Selbsthemmung verbessert gegenüber einer einzigen Flächenanlage.

Erfindungsgemäß ist die Verstellvorrichtung als ein Bauteil ausgebildet, welches an einer Schubladenführung angebracht ist. Das Bauteil ist an der Schubladenführung bzw. einer Schubladen- bzw. Bewegungsschiene eines Teil- oder Vollauszuges angebracht. Ein durch Verdrehen des Verstellelements beweglicher Abschnitt der Verstellvorrichtung ist dabei in Kontakt mit einem am Möbel bzw.am Möbelkorpus positionsfesten Anschlag. Damit wird die Relativposition der Schubladenschiene zum Möbelkorpus durch Verdrehen des Verstellelements bestimmt. Für die Frontspalteinstellung wird der bewegliche Abschnitt der Verstellvorrichtung zum Beispiel um wenige Millimeter hin- oder herverstellt, so dass in der Folge die Schubladenschiene entsprechend relativ zur Korpusschiene bzw. zum Möbelkorpus in eine erste Bewegungsrichtung oder in eine zweite entgegengesetzte Bewegungsrichtung der Schubladenschiene verstellt wird.

Erfindungsgemäß ist die Vorrichtung als ein Bauteil ausgebildet, mit einem durch Drehen des Verstellelements relativ zu einem ersten Vorrichtungsteil der Vorrichtung vorzugsweise linear versetzbaren zweiten Vorrichtungsteil, wobei der Anlageabschnitt an einem der beiden Vorrichtungsteile vorhanden ist. Dies stellt eine zuverlässige und platzsparende Anordnung dar.

Das Bauteil der Verstellvorrichtung kann lösbar zum Beispiel an der Schubladenschiene angesteckt werden, wobei der bewegliche Abschnitt an einem festen Anschlag anstößt, welcher der Korpusschiene zugeordnet ist. Das sichere Heranziehen des beweglichen Abschnitts gegen den festen Anschlag ist vorzugsweise mit einer Einzugsautomatik realisiert, indem unter der Wirkung eines Einzugskraftspeichers die Schubladenschiene in ihre Schließposition gezogen wird, wobei auch die Verstellvorrichtung an dem festen Anschlag ansteht. Die Anschlagsituation ist im Schließzustand der Schubladenschiene immer eingerichtet, auch während der Verstellung des Frontspaltes, egal in welche Richtung der bewegliche Teil der Verstellvorrichtung verstellt wird.

Es ist außerdem von Vorteil, dass Anzeigemittel vorhanden sind, die zur visuellen Anzeige einer Relativstellung eines versetzbaren Vorrichtungsteils bezogen auf die Vorrichtung dienen. Hierdurch ist, einer Person eine schnelle Zuordnung möglich, in welchem Verstellzustand sich die Vorrichtung befindet. Insbesondere dient die Anzeige zur Darstellung einer Einstellung und einer Einstellrichtung beispielsweise im Hinblick auf einen Frontspalt einer Schublade.

Die Erfindung betrifft eine Schubladenführung wie beispielsweise einen Teil- oder Vollauszug, mit einer Vorrichtung gemäß eine der oben beschriebenen Ausgestaltungen. Die Führungseinheit kann eine Einzugsautomatik zum kraftunterstützten Einziehen der Schublade in eine geschlossene Position am Möbel bzw. in die Schließstellung der Schublade aufweisen.

Mit der Verstellvorrichtung ist insbesondere eine Frontspalteinstellung, eine Verstellung einer Neigung des Möbelteils bzw. der Schublade am Möbel und/oder eine Verstellung einer Höhenposition des Möbelteils relativ zur Führungseinheit und damit relativ zum Möbel vornehmbar. Schließlich betrifft die Erfindung ein Möbel mit einem bewegbaren Möbelteil, wobei eine wie oben ausgebildete Führungseinheit vorhanden ist. Insbesondere ist an dem Möbel eine bewegbare Schublade über zwei vergleichbar wirkende Führungseinheiten verschieblich vorhanden. An beiden Führungseinheiten ist vorzugsweise eine Verstellvorrichtung vorgesehen.

### Figurenbeschreibung

Weitere Merkmale und Vorteile der Erfindung sind anhand von Ausführungsbeispielen mit einer erfindungsgemäßen Verstellvorrichtung näher erläutert. Im Einzelnen zeigt:
- Figur 1: eine Frontansicht auf eine erfindungsgemäße Verstellvorrichtung,
- Figur 2: die Verstellvorrichtung gemäß Figur 1 von der Seite,
- Figur 3: die Verstellvorrichtung gemäß Figur 1 von oben,
- Figur 4: die Verstellvorrichtung gemäß der Figuren 1 bis 3 in Explosionsdarstellung,
- Figur 5: die Verstellvorrichtung gemäß der Figuren 1 bis 3 in der Explosionsdarstellung, welche um 180 Winkelgrade gegenüber der Ansicht gemäß Figur 4 um eine aufrechte Achse gedreht ist,
- Figur 6: ein Verstellelement der Verstellvorrichtung gemäß der Figuren 1 bis 5 in Seitenansicht,
- Figur 7 und Figur 8: das Verstellelement gemäß Figur 6 in einer Rückansicht und einer Vorderansicht,
- Figur 9: eine Innenansicht eines Gehäuseteils der Verstellvorrichtung mit einer spiralförmigen Stellkontur des Verstellelements in einer vorgegebenen Drehstellung,
- Figur 10: einen vergrößerten Ausschnitt des Gehäuseteils gemäß Figur 9,
- Figur 11: eine als Vollauszug ausgebildete Führungseinheit mit einer Verstellvorrichtung gemäß der Figuren 1 bis 3,
- Figur 12: der in Figur 11 kreisförmig umrandete Bereich A in vergrößerter Darstellung und
- Figur 13: ein Möbel mit einer daran aufgenommenen Schublade in einer Schließstellung, stark schematisch mit gestrichelt dargestellten Umrissen, wobei eine Führungseinheit gemäß Figur 11 und eine weitere Führungseinheit zur verschieblichen Führung der Schublade am Möbel jeweils mit einer Verstellvorrichtung vorhanden ist.

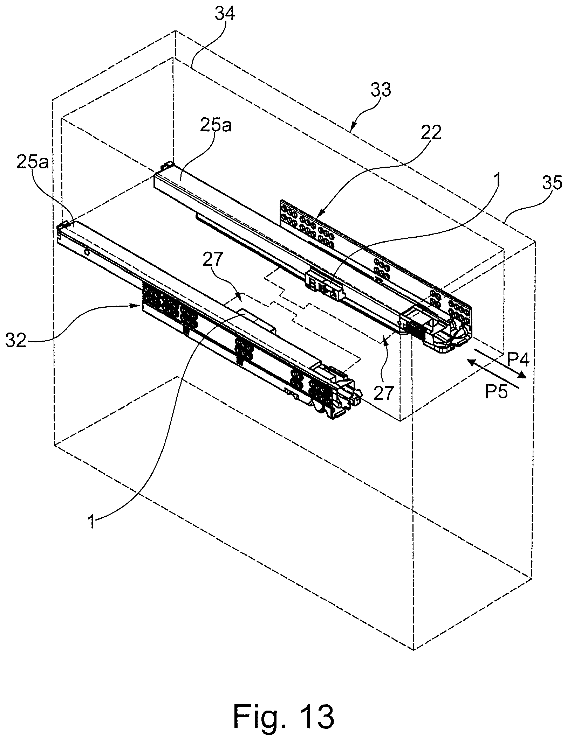

Eine Verstellvorrichtung 1 aus beispielsweise einem Kunststoffmaterial ist vorzugsweise als ein Ansteckteil-Bauteil ausgestaltet, welches an einer Führungseinheit 22 bzw. 32 lösbar anbringbar ist. Die Führungseinheiten 22 bzw. 32 ermöglichen die horizontale verschiebliche Führung eines als Schublade 34 ausgebildeten bewegbaren Möbelteils an einem Möbelkorpus 35 eines Möbels 33 wie einem Küchenschrank (siehe Figur 13). In Figur 13 befindet sich die Schublade 34 in einem Schließzustand am Möbel 33. Ein Frontelement der Schublade 34, das von stirnseitigen Schmalseiten des Möbelkorpus 35 im Schließzustand der Schublade 34 über einen Frontspalt von wenigen Millimetern beabstandet ist, ist in Figur 13 nicht dargestellt.

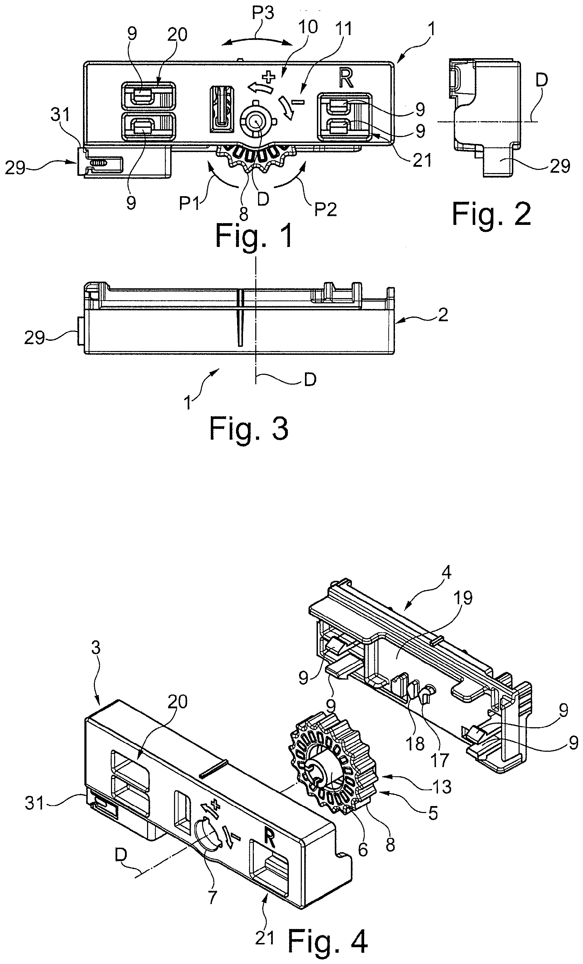

Die Verstellvorrichtung 1, welche zur Frontspaltverstellung zwischen der Schublade 34 und stirnseitigen Abschnitten des Möbelkorpus 35 dient, weist eine quaderförmige Grundform auf und umfasst ein Gehäuse 2 mit einem Gehäusedeckel 3 und einer Gehäuseplatte 4. Ein auch als Schneckenelement bezeichnetes scheibenartiges Verstellelement 5 der Verstellvorrichtung 1 ist um eine Achse D drehbar an der Verstellvorrichtung 1 aufgenommen. Zur drehbaren Lagerung des Verstellelements 5 am Gehäusedeckel 3 ist am Verstellelement 5 ein axial vorstehender, hülsenförmiger, zylindrischer Führungszapfen 6 ausgebildet, der durch eine runde Öffnung 7 einer Drehlagerung im Gehäusedeckel 3 greift. Das in der Öffnung 7 gelagerte Verstellelement 5 ist um die Achse D begrenzt im Uhrzeigersinn gemäß P1 und gegen den Uhrzeigersinn gemäß P2 verdrehbar (siehe Figur 1).

Zum manuellen Verdrehen des Verstellelements 5 ist außen umfänglich durchgehend am Verstellelement 5 ein Bedienabschnitt 8 mit einer Zahnkontur ausgebildet.

Zur visuellen Anzeige eines Einstellzustandes der Verstellvorrichtung 1 sind am Gehäusedeckel 3 sichtbare offene Anzeigefelder 20 und 21 mit darin versetzbaren Anzeigeelementen 9 vorhanden. Die Anzeigeelemente 9 stehen an der Gehäuseplatte 4 in Richtung des Gehäusedeckels 3 ab. Außerdem ist nahe der Drehachse D außen am Gehäusedeckel 3 in einem ersten Hinweisfeld 10 ein Pfeilsymbol mit einem PlusZeichen als Hinweis zur Vergrößerung des Frontspaltes und in einem zweiten Hinweisfeld 11 ein Pfeilsymbol mit einem Minus-Zeichen als Hinweis zur Verkleinerung des Frontspaltes vorhanden. Demgemäß erfolgt eine Vergrößerung des Frontspalts durch Drehen des Verstellelements 5 entgegen dem Uhrzeigersinn bzw. eine Verkleinerung durch Drehen des Verstellelements 5 im Uhrzeigersinn.

Die beiden lösbar zusammensteckbaren Gehäuseteile 3, 4 des Gehäuses 2 bilden innen einen Hohlraum, in dem das Verstellelement 5 untergebracht ist. An einer flachen Rückseite 14 des Verstellelements 5, welche gegenüber der Seite mit dem Führungszapfen 6 vorhanden ist, ist eine zur Drehachse D spiralförmige Stellkontur 13 als zur Rückseite 14 vorstehender Steg ausgebildet. Die Stellkontur 13 weist einen in der Grundform gebogenen, schneckenförmigen bzw. spiralförmigen Verlauf auf. In Umfangsrichtung zur Drehachse D umfasst die Stellkontur 13 radial innenseitig und radial außenseitig jeweils einen Mehrkantabschnitt 15 mit Flächenabschnitten 16. Grundsätzlich ist es nicht ausgeschlossen, dass die Stellkontur 13 nur radial innen oder nur radial außen den Mehrkantabschnitt 15 aufweist.

Die Mehrkantabschnitte 15 umfassen eine Vielzahl von gleichartigen flachen bzw. ebenen aneinandergereihten Flächenabschnitten 16, die winklig zueinander ausgerichtet sind.

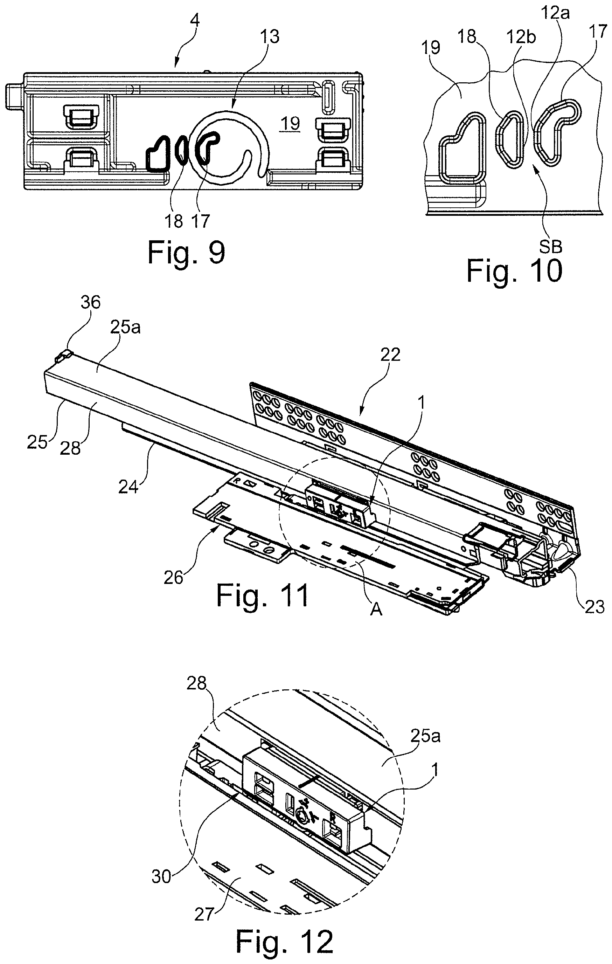

In einer Drehstellung des Verstellelements 5 wirken jeweils zwei über die Stegdicke der Stellkontur 13 beabstandete gegenüberliegende Flächenabschnitte 16 der Stellkontur 13 mit jeweils einem flachen Gegenabschnitt 12a, 12b (s. Figur 10) von Erhöhungen 17, 18 innen an der Gehäuseplatte 4 zusammen. Die Erhöhungen 17, 18 sind an einer ebenen Innenseite 19 der Gehäuseplatte 4 abstehend ausgestaltet. Dabei befinden sich die zwei Flächenabschnitte 16 und die Gegenabschnitte 12a, 12b in gegenseitiger flächiger Anlage, was insbesondere Figur 9 verdeutlicht. In Figur 9 ist nur die Stellkontur 13 des Verstellelements 5 und die Gehäuseplatte 4 dargestellt. Die Gegenabschnitte 12a, 12b liegen einander gegenüber und sind über einen Spaltbereich SB voneinander beabstandet. Die Breite des Spaltbereichs SB entspricht etwa der Stegdicke der Stellkontur 13. Die Gegenabschnitte 12a, 12b bilden gegenüberliegende parallel ausgerichtete flache Anlageflächen, zur Anlage an den jeweiligen Flächenabschnitten 16 der Stellkontur 13.

Mit der flächigen Anlage des Gegenabschnitts 12a an einem radial innenliegenden Flächenabschnitt 16 und mit der flächigen Anlage des Gegenabschnitts 12b an einem radial außenliegenden Flächenabschnitt 16 der Stellkontur 13 wird eine Selbsthemmung der Verstellvorrichtung 1 in jeder möglichen Drehstellung des Verstellelements 5 eingerichtet. Damit wird ein Widerstand gegen ein ungewolltes Weiterdrehen durch äußere in der Praxis mögliche bzw. auftretende Kräfte bereitgestellt, wie kurze stoßartige und/oder geringere über längere Zeiträume wirksame Kräfte auch im Lastwechsel, die sich im Bereich der aneinander anliegenden Flächenabschnitte 16 mit den Gegenabschnitten 12a und 12b auswirken, z. B. indem dort Druckkräfte und/oder Zugkräfte auf die Bereiche 16, 12a und 12b wirken. Die Verstellvorrichtung 1 ist so abgestimmt, dass nur bei einem bewussten Einwirken durch eine Person auf das Verstellelement 5 und dessen Verdrehen die momentan eingestellte Drehstellung des Verstellelements 5 verändert werden kann. Die Wirkung der Veränderung der Drehstellung des Verstellelements 5 zur Frontspalteinstellung wird weiter unten erläutert.

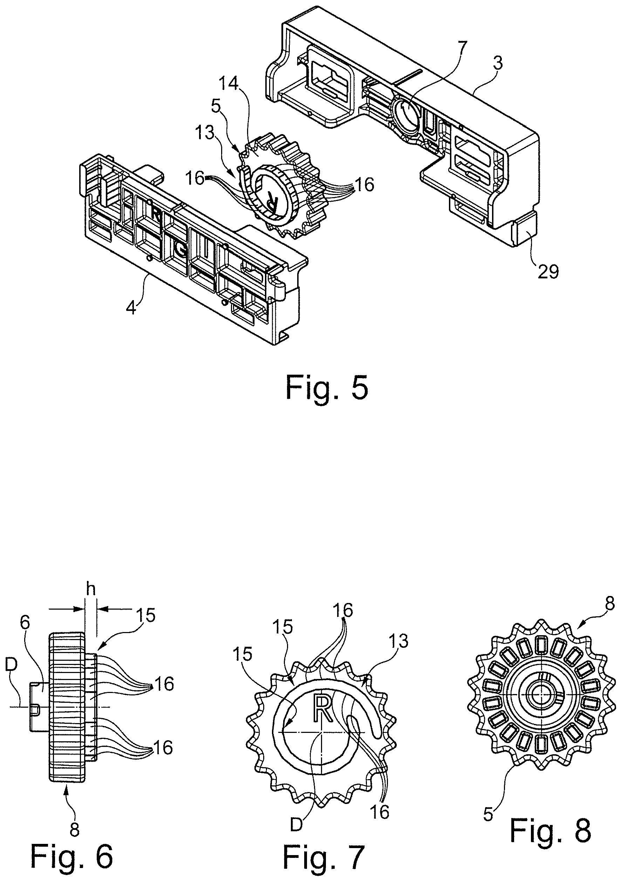

Die Stellkontur 13 ist im Ausführungsbeispiel über etwas mehr als 360 Winkelgrade umfänglich zur Achse D ausgestaltet. Die Höhe h der spiralförmigen Stellkontur 13 beträgt zum Beispiel ca. einen Millimeter (siehe Figur 6). Die Stellkontur 13 weist innenseitig und außenseitig ohne Unterbrechung die Polygonal- bzw. Mehrkantform des Mehrkantabschnitts 15 auf.

Die Form bzw. Größe aller Flächenabschnitte 16 ist vorzugsweise außen- und innenseitig jeweils identisch.

Figur 11 zeigt perspektivisch schräg von oben die Führungseinheit 22 für die Schublade 34, die sich mit ihrem Schubladenboden auf einer Oberseite 25a einer Schubladenschiene 25 der Führungseinheit 22 abstützt. Die Führungseinheit 22 umfasst eine innen an einer Seitenwand des Möbels 33 anschraubbaren Korpusschiene 23, eine Mittelschiene 24 und die Schubladenschiene 25. Des Weiteren ist an der Korpusschiene 23 an einem unteren horizontalen Abschnitt eine Zusatzeinrichtung 26 vorgesehen, welche insbesondere eine Einzugsautomatik 27 aufweist. Die Einzugsautomatik 27 dient zum selbsttätigen kontrollierten kraftunterstützten Einziehen der an der Führungseinheit 22 aufsitzenden Schublade 34 kurz vor Erreichen der Schließstellung an dem Möbel 33.

Die Zusatzeinrichtung 26 kann auch eine Touch-Latch-Vorrichtung sein oder eine solche umfassen, welche die Schublade 34 nach einer Betätigung von außen, in die Öffnungsrichtung P4 ausstößt. Für eine Touch-Latch-Vorrichtung ist eine Vorrichtung vorteilhaft und wichtig, um eine Einstellung des Frontspalts vornehmen zu können. Vorteilhaft ist dabei, dass mit der als Frontspalteinstellung ausgebildeten Verstellvorrichtung ein maximal möglicher Auslöseweg zum Auslösen der Touch-Latch-Vorrichtung einstellbar ist. Die Auslösung der Touch-Latch-Vorrichtung erfolgt durch die Betätigung von außen, indem ein Nutzer die Schublade im Schließzustand gemäß Figur 13 von vorne nach innen bzw. in Schließrichtung P5 drückt. Der zur sicheren Auslösung mindestens notwendige Auslöseweg der Touch-Latch-Vorrichtung muss vom Frontspalt bereitgestellt werden. Der Frontspalt darf daher nicht geringer sein als der notwendige Auslöseweg der Touch-Latch-Vorrichtung.

An der Schubladenschiene 25 ist durch ein Anstecken der Gehäuseplatte 4 an einem inneren vertikal sich erstreckenden Schenkel 28 die Verstellvorrichtung 1 angebracht.

Dabei ist eine Anschlagfläche 29 am Gehäusedeckel 3 in Kontakt mit einem relativ zur Einzugsautomatik 27 und damit zum Möbelkorpus positionsfesten Gegenanschlag 30, wenn die Schublade 34 sich im Schließzustand befindet.

Zur Verstellung des Frontspaltes wird das Verstellelement 5 im oder gegen den Uhrzeigersinn verdreht, womit aufgrund der veränderten Drehstellung der Stellkontur 13 und deren im Verlauf veränderlichem Radius zur Drehachse D im Zusammenwirken mit den positionsfesten Gegenabschnitten 12a, 12b der Gehäusedeckel 3 relativ zur Gehäuseplatte 4 bzw. der Schubladenschiene 25 gemäß P3 vor oder zurück in Längsrichtung der Schubladenschiene 25 verschoben wird. Damit wird in der Schließstellung der Schublade 34 mit dem Kontakt der Anschlagfläche 29 an dem positionsfesten Gegenanschlag 30 an der Einzugsautomatik 27 die Schubladenschiene 25 entsprechend relativ zum Möbelkorpus 35 verschoben.

Durch die Kraftwirkung einer Einzugsfeder der Einzugsautomatik 27 wird die Schubladenschiene 25 und damit die Anschlagfläche 29 immer gegen den Gegenanschlag 30 an der Einzugsautomatik 27 herangezogen. Die Anschlagfläche 29 weist im dargestellten Ausführungsbeispiel ein flaches Anschlagelement 31 auf, das z. B. aus einem weichen Gummimaterial besteht.

Figur 13 zeigt stark schematisiert das Möbel 33 mit der Schublade 34 und der Führungseinheit 22 gemäß Figur 11, wobei die Einzugsautomatik 27 nur gestrichelt dargestellt ist. Die weitere gegenüberliegende auf gleicher vertikaler Höhe liegende entsprechende Führungseinheit 32 weist ebenfalls eine Verstellvorrichtung 1 und eine Einzelzugsautomatik 27 auf. Die Schublade 34 ist in dem Möbelkorpus 35 insbesondere durch die jeweiligen Einzugsfedern in der Schließstellung gehalten.

Die Schublade 34 liegt jeweils auf den Oberseiten 25a der Schubladenschienen 25 auf, so dass die Schublade 34 in Richtung P4 herausbewegbar und in Richtung P5 einschiebbar ist. Die Schublade 34 ist durch ein Hakenelement 36 am hinteren Ende der jeweiligen Schubladenschiene 25 mit dieser verbunden, wobei die Hakenelemente 36 in jeweils eine Öffnung rückseitig an der Schublade 34 eingreifen.

### Bezugszeichenliste:

- 1: Verstellvorrichtung
- 2: Gehäuse
- 3: Gehäusedeckel
- 4: Gehäuseplatte
- 5: Verstellelement
- 6: Führungszapfen
- 7: Öffnung
- 8: Bedienabschnitt
- 9: Anzeigeelement
- 10, 11: Hinweisfeld
- 12a, 12b: Gegenabschnitt
- 13: Stellkontur
- 14: Rückseite
- 15: Mehrkantabschnitt
- 16: Flächenabschnitt
- 17, 18: Erhöhung
- 19: Innenseite
- 20, 21: Anzeigefeld
- 22: Führungseinheit
- 23: Korpusschiene
- 24: Mittelschiene
- 25: Schubladenschiene
- 25a: Oberseite
- 26: Zusatzeinrichtung
- 27: Einzugsautomatik
- 28: Schenkel
- 29: Anschlagfläche
- 30: Gegenanschlag
- 31: Anschlagelement
- 32: Führungseinheit
- 33: Möbel
- 34: Schublade
- 35: Möbelkorpus
- 36: Hakenelement

## Patentansprüche

1. Schubladenführung (22, 32) mit einer
Vorrichtung (1) zur Verstellung einer Position eines Möbelteils (34) an einem Möbel (33), wobei mit der Verstellung die Position des Möbelteils (34) in einer Schließstellung an einem Möbelkorpus des Möbels (33) vorgebbar ist, und wobei das Möbelteil (34) über die Schubladenführung (22, 32) bewegbar an dem Möbelkorpus anbringbar ist, umfassend Positioniervorgabemittel, die zwischen dem Möbelkorpus und dem bewegbaren Möbelteil (34) vorgesehen sind, wobei die Positioniervorgabemittel ein an einem Drehlager um eine Drehachse drehbares Verstellelement (5) und einen Anlageabschnitt umfassen, der mit einer Stellkontur (13) des Verstellelements (5) zusammenwirkt, wobei die Stellkontur (13) zur Drehachse spiralartig verlaufend ausgebildet ist, womit abhängig von der Drehstellung des Verstellelements (5) ein Bereich der Stellkontur (13) und der Anlageabschnitt derart zusammenwirken, dass ein Anschlag (29) der Vorrichtung (1) in eine Stellung versetzbar ist, mit welcher die Position des Möbelteils (34) in der Schließstellung vorgebbar ist, wobei die Vorrichtung (1) als ein Bauteil ausgebildet ist, welches an der Schubladenführung (22, 32) angebracht ist, mit einem durch Drehen des Verstellelements relativ zu einem ersten Vorrichtungsteil (4) der Vorrichtung (1) linear versetzbaren zweiten Vorrichtungsteil (3), wobei der Anlageabschnitt an einem der beiden Vorrichtungsteile (3, 4) vorhanden ist, **dadurch gekennzeichnet, dass** die Stellkontur (13) in Umfangsrichtung zur Drehachse des Verstellelements (5) einen Mehrkantabschnitt (15) mit mehreren zueinander winklig ausgerichteten Flächenabschnitten (16) aufweist, wobei die Stellkontur (13) mit einem Gegenabschnitt (12a, 12b) am Anlageabschnitt derart zusammenwirkt, dass mehrere vorgegebene Drehstellungen des Verstellelements (5) einrichtbar sind, wobei in jeder vorgegebenen Drehstellung des Verstellelements (5) ein Flächenabschnitt (16) der Stellkontur (13) flächig an dem Gegenabschnitt (12a, 12b) anliegt, womit ein Widerstand gegen ein Verdrehen des Verstellelements (5) eingerichtet ist, wobei durch Verdrehen des Stellelements ein beweglicher Abschnitt der Verstellvorrichtung in Kontakt ist mit einem positionsfesten Anschlag am Möbelkorpus oder einem festen Anschlag, welcher der Korpusschiene zugeordnet ist.

2. Schubladenführung nach Anspruch 1, **dadurch gekennzeichnet, dass** der Mehrkantabschnitt (15) mehrere in Verlaufsrichtung der Stellkontur (13) benachbarte Flächenabschnitte (16) umfasst.

3. Schubladenführung nach Anspruch 1 oder Anspruch 2, **dadurch gekennzeichnet, dass** die Stellkontur (13) als stegartige vorstehende Erhebung an einer Grundplatte des Verstellelements (5) ausgestaltet ist.

4. Schubladenführung nach einem der vorhergehenden Ansprüche, **dadurch gekennzeichnet, dass** die Stellkontur (13) gegenüberliegende Außenseiten aufweist, wobei jede Außenseite jeweils mehrere zueinander winklig ausgerichtete Flächenabschnitte (16) umfasst.

5. Schubladenführung nach einem der vorhergehenden Ansprüche, **dadurch gekennzeichnet, dass** das Verstellelement (5) einen Bedienabschnitt (8) zur Verdrehung des Verstellelements (5) von außen aufweist.

6. Schubladenführung nach einem der vorhergehenden Ansprüche, **dadurch gekennzeichnet, dass** der Anlageabschnitt an einem zu einer Grundfläche (19) erhaben ausgebildeten Erhöhungsabschnitt (17, 18) ausgestaltet ist.

7. Schubladenführung nach einem der vorhergehenden Ansprüche, **dadurch gekennzeichnet, dass** Anzeigemittel (9, 20, 21) vorhanden sind, die zur visuellen Anzeige einer Relativstellung eines versetzbaren Vorrichtungsteils (4) bezogen auf die Vorrichtung dienen.

8. Möbel (33) mit einem bewegbaren Möbelteil (34) und einer Schubladenführung nach einem der vorhergehenden Ansprüche.

## Claims

1. Drawer guide (22, 32) with a device (1) for adjusting a position of a furniture part (34) on an item of furniture (33), wherein with the adjustment the position of the furniture part (34) in a closed position can be predefined on a furniture body of the item of furniture (33), and wherein by means of the drawer guide (22, 32) the furniture part (34) can be mounted to be movable on the furniture body, comprising positioning means which are provided between the furniture body and the movable furniture part (34), wherein the positioning means comprise an adjusting element (5) which is rotatable on a rotary bearing about an axis of rotation and a bearing section which cooperates with a setting contour (13) of the adjusting element (5), wherein the setting contour (13) is designed to be in the form of spiral relative to the axis of rotation, whereby depending on the rotary position of the adjusting element (5) an area of the setting contour (13) and the bearing section cooperate with one another such that a stop (29) of the device (1) can be moved into a position by which the position of the furniture part (34) in the closed position can be predefined, wherein the device (1) is designed as a component which is attached onto the drawer guide (22, 32) with a second device part (3) which is linearly displaceable to a first device part (4) of the device (1) by rotating the adjusting element, wherein the stop section is provided on one of the two device parts (3, 4), **characterised in** the setting contour (13) in circumferential direction to the axis of rotation of the adjusting element (5) has a polygonal section (15) with a plurality of surface sections (16) arranged at an angle to one another, wherein the setting contour (13) cooperates with a counter section (12a, 12b) on the bearing sections such that a plurality of predefined rotary positions of the adjusting element (5) can be set, wherein in each predefined rotary position of the adjusting element (5) a surface section (16) of the setting contour (13) bears flat on the counter section (12a, 12b), whereby a resistance to the rotation of the adjusting element (5) is set, wherein by rotating the setting element a movable section of the adjusting device is in contact with a stationary stop on the furniture body or a fixed stop which is assigned to the body rail.

2. Drawer guide according to claim 1, **characterised in that** the polygonal section (15) comprises a plurality of surface sections (16) which are adjacent to one another in the running direction of the setting contour (13).

3. Drawer guide according to claim 1 or claim 2, **characterised in that** the setting contour (13) is designed as a web-like projecting elevation on a base plate of the adjusting element (5).

4. Drawer guide according to any of the preceding claims, **characterised in that** the setting contour (13) has opposite outer sides, wherein each outer side comprises respectively a plurality of mutually angular surface sections (16).

5. Drawer guide according to any of the preceding claims, **characterised in that** the adjusting element (5) has an operating section (8) for rotating the adjusting element (5) from the outside.

6. Drawer guide according to any of the preceding claims, **characterised in that** the bearing section is formed on a raised section (17, 18) which is elevated relative to a base surface (19).

7. Drawer guide according to any of the preceding claims, **characterised in that** display means (9, 20, 21) are provided which are used for visually displaying a relative position of a displaceable device part (4) relative to the device.

8. Item of furniture (33) with a movable furniture part (34) and a drawer guide according to any of the preceding claims.

## Revendications

1. Glissière de tiroir (22, 32) avec un dispositif de réglage (1) d'une position d'une partie de meuble (34) sur un meuble (33), le réglage permettant de prédéfinir la position de la partie de meuble (34) dans une position fermée sur un corps de meuble du meuble (33), et la partie de meuble (34) pouvant être reçue mobile sur le corps de meuble via la glissière de tiroir (22, 32), comprenant des moyens de prédéfinition du positionnement prévus entre le corps de meuble et la partie de meuble (34) mobile, les moyens de prédéfinition du positionnement comprenant un élément de réglage (5) pouvant tourner sur un pivot autour d'un axe de rotation, et une section d'appui qui interagit avec un contour de réglage (13) de l'élément de réglage (5), le contour de réglage (13) étant conçu en s'étendant en spirale par rapport à l'axe de rotation, de sorte qu'une zone du contour de réglage (13) et la section d'appui interagissent en fonction de la position de rotation de l'élément de réglage (5) de telle manière qu'une butée (29) du dispositif (1) peut être mise dans une position par laquelle peut être prédéfinie la position de la partie de meuble (34) en position fermée, le dispositif (1) étant conçu comme un composant qui est monté sur la glissière de tiroir (22, 32), avec une deuxième partie de dispositif (3) qui peut être déplacée linéairement par rotation de l'élément de réglage par rapport à une première partie de dispositif (4) du dispositif (1), la section d'appui étant présente sur une des deux parties de dispositif (3, 4), **caractérisée en ce que** le contour de réglage (13) présente dans la direction circonférentielle par rapport à l'axe de rotation de l'élément de réglage (5) une section polygonale (15) avec une pluralité de sections de surface (16) faisant un angle les unes par rapport aux autres, le contour de réglage (13) coopérant de telle sorte avec une section conjuguée (12a, 12b) sur la section d'appui que plusieurs positions de rotation prédéfinies de l'élément de réglage (5) peuvent être établies, dans chaque position de rotation prédéfinie de l'élément de réglage (5) une section de surface (16) du contour de réglage (13) reposant à plat contre la section conjuguée (12a,12b), de sorte qu'une résistance à la rotation de l'élément de réglage (5) est établie, une section mobile du dispositif de réglage étant en contact, par rotation de l'élément de réglage, avec une butée fixe sur le corps du meuble ou une butée fixe associée au rail du corps de meuble.

2. Glissière de tiroir selon la revendication 1, **caractérisée en ce que** la section polygonale (15) comprend plusieurs sections de surface (16) adjacentes dans la direction de déplacement du contour de réglage (13).

3. Glissière de tiroir selon la revendication 1 ou 2, **caractérisée en ce que** le contour de réglage (13) est réalisé sous la forme d'une protubérance saillante en forme de bande sur une plaque de base de l'élément de réglage (5).

4. Glissière de tiroir selon l'une des revendications précédentes, **caractérisée en ce que** le contour de réglage (13) est muni de faces extérieures opposées, chaque face extérieure comprenant plusieurs sections de surface (16) faisant un angle les unes par rapport aux autres.

5. Glissière de tiroir selon l'une des revendications précédentes, **caractérisée en ce que** l'élément de réglage (5) est muni d'une section de commande (8) pour faire tourner l'élément de réglage (5) depuis l'extérieur.

6. Glissière de tiroir selon l'une des revendications précédentes, **caractérisée en ce que** la section d'appui est formée sur une section surélevée (17, 18) formée en relief par rapport à une surface de base (19).

7. Glissière de tiroir selon l'une des revendications précédentes, **caractérisée en ce que** des moyens d'affichage (9, 20, 21) sont prévus qui servent à l'affichage visuel d'une position relative d'une partie de dispositif (4) déplaçable par rapport au dispositif.

8. Meuble (33) avec une partie de meuble (34) mobile et une glissière de tiroir selon l'une des revendications précédentes.
